Europäisches Patentamt

**European Patent Office**

**Office européen des brevets**

(19)

(11) Numéro de publication: **0 233 424**
**B1**

(12) **FASCICULE DE BREVET EUROPEEN**

(45) Date de publication du fascicule du brevet:
**14.11.90**

(51) Int. Cl.⁵: **G21C 17/10**

(21) Numéro de dépôt: **86402792.5**

(22) Date de dépôt: **12.12.86**

(54) **Dispositif à conduits de guidage de sondes pour réacteur nucléaire.**

(30) Priorité: **13.12.85  FR 8518495**

(43) Date de publication de la demande:
**26.08.87 Bulletin 87/35**

(45) Mention de la délivrance du brevet:
**14.11.90 Bulletin 90/46**

(84) Etats contractants désignés:
**AT BE CH DE ES GB IT LI NL SE**

(56) Documents cités:
**FR-A- 2 065 512**
**FR-A- 2 338 551**
**US-A- 3 060 111**

(73) Titulaire: **FRAMATOME, Tour Fiat 1, Place de la Coupole,
F-92400 Courbevoie(FR)**

(72) Inventeur: **Babin, Michel, 148, avenue Jean Jaurès,
F-93500 Pantin(FR)**
Inventeur: **Desfontaines, Guy, 18, rue Jean Jaurès,
F-92800 Puteaux(FR)**

(74) Mandataire: **Fort, Jacques et al, CABINET
PLASSERAUD 84, rue d'Amsterdam, F-75009 Paris(FR)**

ACTORUM AG

## Description

L'invention concerne de façon générale un dispositif à conduits de guidage de sondes pour réacteur nucléaire et trouve une application particulièrement importante dans le cas des sondes de mesure de température par thermocouple d'un réacteur à eau pressurisé, dit REP.

Toutefois, l'invention est applicable à tous types de sondes démontables et est adaptable à tous types de réacteur nucléaire comprenant une cuve de résistance à la pression d'un réfrigérant fermée par un couvercle amovible, un coeur constitué d'assemblages combustibles et pourvu d'une plaque supérieure perforée ainsi que d'équipements internes interposés entre le coeur et le couvercle et dont la dite plaque est solidaire.

On connaît déjà différents dispositifs de conduits de guidage ou de tubes traversant le couvercle d'un réacteur pour descendre ensuite au niveau de la tête des assemblages.

Dans le document FR-A-2 065 512 concernant un dispositif pour l'instrumentation du coeur de réacteur à eau sous pression, on trouve une disposition où les pénétrations des conduits de guidage pour sonde à bille ou sondes de mesure stationnaires sont en périphérie du couvercle du réacteur et se répartissent ensuite horizontalement au-dessus des équipements internes par l'intermédiaire de bras de support avant de descendre au niveau du coeur.

Cette solution présente divers inconvénients. Elle fait cheminer les conduits de guidage dans le flux principal sans aucune protection particulière contre les chocs ou les turbulences. Le nombre de ces conduits est par ailleurs limité par la compacité des équipements internes supérieurs, et par l'encombrement de certains de ces équipements comme les tubes guides des grappes de contrôle du réacteur.

Toutefois, il pouvait sembler à l'homme de métier que ce type de dispositif était suffisant bien que certaines mesures, comme celle des températures du réfrigérant à la sortie d'un assemblage ne puissent se faire qu'en nombre réduit. Le document FR-A-2 332 551 divulgue un dispositif à conduits de guidage de sonde pour réacteur nucléaire tel que décrit dans le préambule de la revendication 1.

La présente invention vise à fournir un dispositif correspondant mieux à l'exigence de la pratique, notamment en ce qu'elle permet :
- une meilleure protection des conduits de guidage à l'égard des effets dynamiques du réfrigérant sortant des assemblages.
- une meilleure protection contre les chocs lors des opérations de maintenance effectuées au niveau des guides de grappes ;
- une meilleure utilisation des espaces et volumes situés directement au dessus des assemblages dans les équipements internes supérieurs, libérant ainsi cette place pour des équipements tels que les mécanismes de commande des grappes.
- la possibilité de multiplier les points de mesure puisque le cheminement proposé des conduits de guidage n'en limite plus le nombre.

Dans ce but, l'invention propose donc un dispositif conforme à la partie caractérisante de la revendication 1. Le dispositif décrit ci-dessus présente des avantages qui revêtent une importance particulière dans les réacteurs à grand nombre de grappes tels que les réacteurs à variation de spectre RVS et/ou sous modérés RSM qui utilisent des grappes de commandes et des grappes de variation du spectre d'énergie des neutrons.

Dans un mode avantageux de réalisation les colonnes verticales de passages au travers des équipements internes sont disposées en périphérie du coeur et montées de façon à pouvoir se dilater librement, les conduits de guidage ayant ensuite des cheminements horizontaux intégrés dans des gorges usinées sur le dessus de la plaque supérieure de coeur et maintenus en place par des séries de pontets.

L'invention sera mieux comprise à la lecture de la description qui suit d'un mode particulier de réalisation, donnée à titre d'exemple non limitatif. La description se réfère aux dessins qui l'accompagnent dans lesquels :

- la figure 1 est un schéma de principe en perspective du dispositif, et de son environnement.

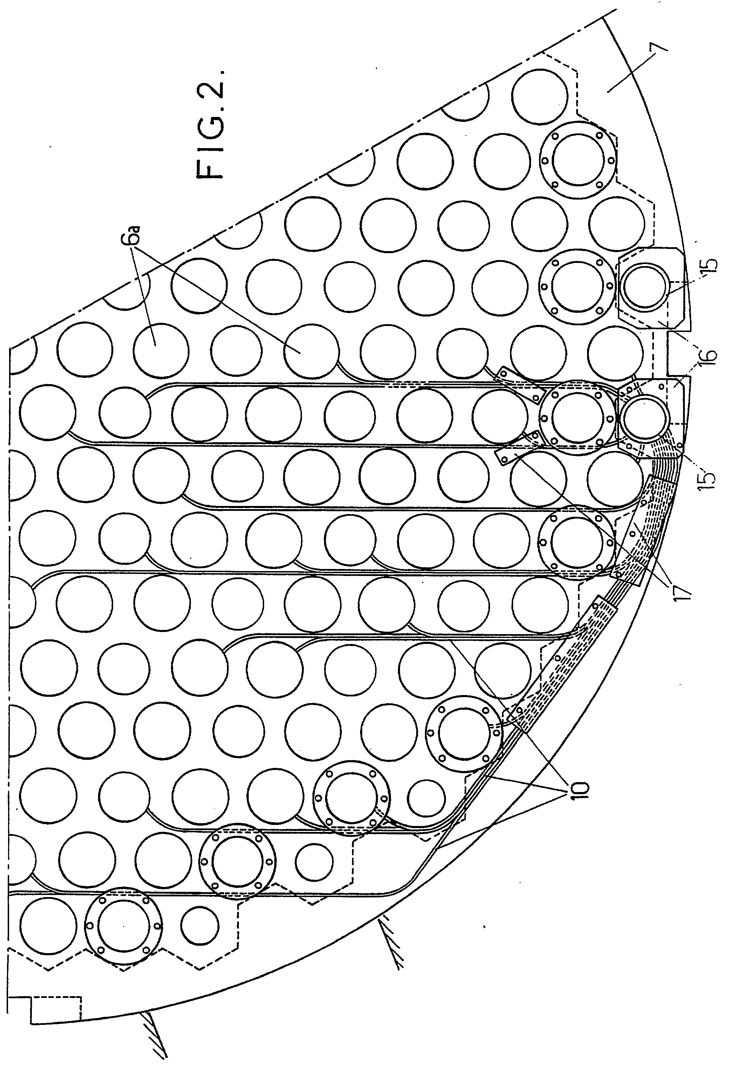

- la figure 2 est une vue de dessus de la plaque supérieure du cœur du réacteur montrant à titre d'exemple le cheminement de tubes de guidage et leur répartition,

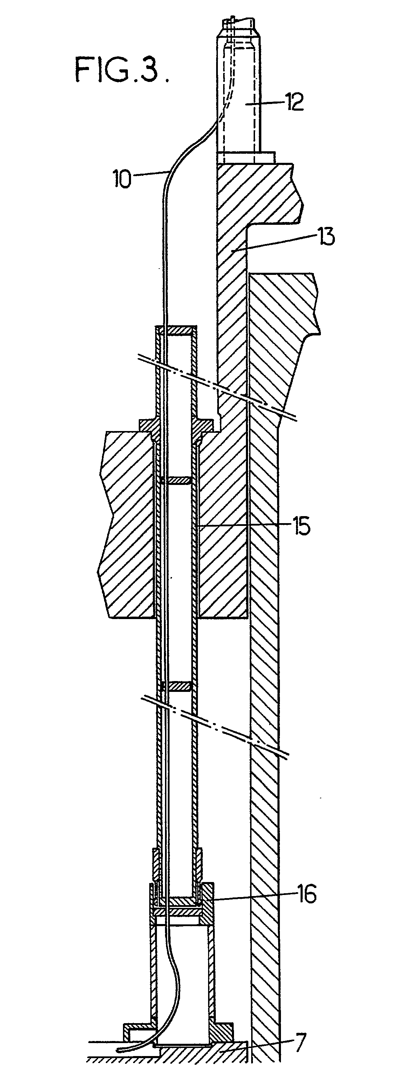

- la figure 3 représente une colonne verticale en coupe suivant un plan vertical passant par son axe.

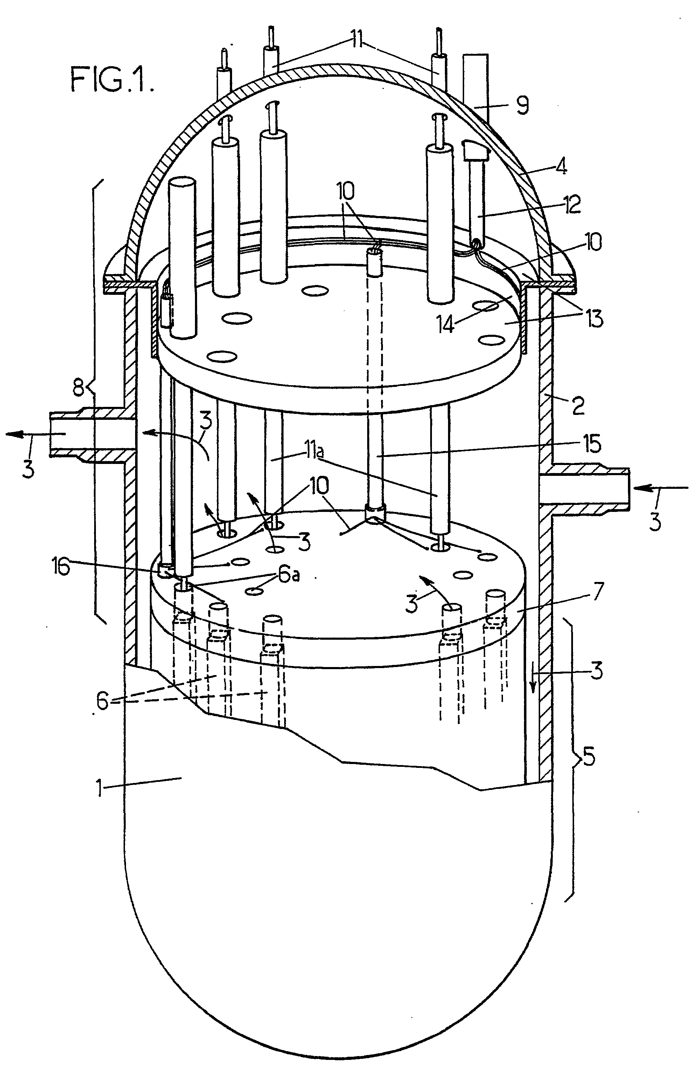

Sur la figure 1 on a représenté schématiquement un réacteur à eau préssurisée REP 1 comprenant : une cuve 2 de résistance à la pression d'un réfrigérant empruntant le trajet 3, fermée par un couvercle amovible 4, un coeur 5 constitué d'assemblages combustibles 6 et pourvu d'une plaque supérieure 7 et des équipements internes 8. Le réfrigérant traverse le coeur de bas en haut de façon connue en soi. La plaque supérieure 7 est traversée par le réfrigérant au travers des trous 6a. Sur la figure 1, les assemblages combustibles 6 qui sont en général de section polygonale sont représentés en pointillé. Ils sont situés à l'aplomb des trous de la plaque 7.

Des conduits de guidage 10 sont prévus pour livrer passage chacun à une sonde thermocouple rétractable permettant de mesurer la température du flux réfrigérant à la sortie d'un assemblage 6. Il comprend plusieurs fourreaux de traversée 9 étanche du couvercle 4 par lesquels passent les conduits de guidage 10 situé autout de l'ensemble des autres pénétrations du couvercle 4 telles que celles des moteurs de déplacement des grappes 11. Les grappes sont guidées par des colonnes de guidage 11a qui font partie des équipements internes supérieurs. Par ailleurs, et pour simplifier, un seul fourreau 9 a été représenté sur la figure 1.

Les conduits de guidage 10 sont regroupés dans des colonnes supérieures 12. Ces colonnes passent à travers les fourreaux de traversées 9 et descendent verticalement jusqu'à la plaque supérieure 13 des équipements internes 8 et reposent sur elle. Elles correspondent à la maille de pénétration choisie sur le couvercle 4.

A la sortie de ces colonnes supérieures 12 les conduits de guidage 10 se répartissent transversalement aux assemblages 6 en suivant un cheminement à proximité immédiate de la surface interne du couvercle 4 et de la cuve 2.

Le cheminement horizontal à la périphérie du réacteur permet aux conduits d'être proches et fixes sur la virole 14 de la plaque supérieure 13 des équipements internes 8 où les conduits de guidage 10 sont maintenus dans une zone relativement protégée car située à l'écart du flux principal du réfrigérant.

Une fois répartis sur le pourtour du réacteur les conduits de guidage 10 sont groupés en faisceaux et traversent les équipements internes 8 en passant par des colonnes de protection 15, dites colonnes inférieures dans des zones où le réfrigérant à une turbulence réduite, situées en périphérie du réacteur.

Ces colonnes 15 sont contenues dans le volume des équipements internes supérieur 8. Elles sont fixées en partie supérieure à la plaque supérieure 13 des dits équipements 8, par exemple par boulonnage, et vont jusqu'à des embases 16 solidaires de la plaque supérieure 7 du coeur 5. Elles peuvent se dilater librement en partie basse en coulissant à frottement doux dans les dites embases 16 permettant le centrage et le guidage des colonnes 15.

Ces embases 16 sont fixées à la plaque supérieure 7 du coeur 5. Elles autorisent le passage des coudes des conduits de guidage 10 des thermocouples en respectant comme dans le reste du dispositif selon l'invention le rayon de courbure minimum permettant le retrait et le réengagement des fils des thermocouples. La valeur dudit rayon de courbure étant supérieure à 150 mm pour les thermocouples habituellement utilisés dans les réacteurs REP.

Arrivés au niveau de la plaque supérieure 7 du coeur 5 les conduits de guidage 10 de répartissent transversalement aux assemblages 6 et sont placés dans des rainures de profondeur supérieure au diamètre des conduits usinées dans la plaque 7 jusqu'à proximité immédiate des trous 6a de sortie du réfrigérant ayant directement traversé les assemblages 6 pour lesquels on veut mesurer la température de sortie du réfrigérant.

Le maintien de ces conduits de guidage est assuré par des pièces mécaniques formant capot 17 fixées à la plaque supérieur du coeur 5.

## Revendications

1. Dispositif à conduits de guidage de sonde pour réacteur nucléaire comprenant une cuve (2) de résistance à la pression d'un réfrigérant munie d'un couvercle amovible (4), un coeur (5) constitué d'assemblages combustibles (6) et pourvu d'une plaque supérieure de coeur (7) perforée, des équipements internes (8) solidaires de ladite plaque supérieure de coeur (7), interposés entre le coeur (5) et le couvercle (4); le dit dispositif comprenant au moins un fourreau de traversée (9) étanche du couvercle (4) et plusieurs conduits fixes de guidage individuel (10) se terminant chacun à proximité et en bout de la sortie du réfrigérant hors d'un assemblage du coeur, chaque conduit (10) suivant une colonne de protection (15) à sa traversée des internes étant destiné à livrer passage à un élément allongé de jonction avec une sonde située dans la partie terminale du conduit, caractérisé: en ce que tous les conduits de guidage (10) pénétrant à travers un même fourreau sont regroupés dans une colonne supérieure (12) pénétrant dans la cuve à travers le fourreau (9) et descendant verticalement jusqu'au-dessus et à proximité des équipements internes (8); en ce que les conduits (10) se répartissent ensuite suivant des trajets transversaux aux assemblages et situés à proximité immédiate de la surface interne du couvercle et de la cuve; en ce que les conduits (10) sont regroupés ensuite en plusieurs faisceaux de chacun plusieurs conduits, chaque faisceau traversant lesdits équipements internes (8) en passant par une des colonnes de protection verticales (15), qui sont situées à la périphérie du réacteur, dans des zones où le réfrigérant a une turbulence réduite; et en ce que les conduits (10) de chaque faisceau se répartissent suivant des trajets transversaux aux assemblages et proches de la plaque supérieure de coeur (7) jusqu'à proximité immédiate de la sortie des assemblages respectifs.

2. Dispositif à conduits de guidage selon la revendication 1, caractérisé en ce que les cheminements horizontaux des conduits (10) à proximité immédiate de la sortie des assemblages sont intégrés dans la plaque supérieure du coeur (7).

3. Dispositif à conduits de guidage selon la revendication 2, caractérisé en ce que les cheminements intégrés dans la plaque supérieure de coeur (7) sont maintenus par des éléments mécaniques formant capot (17).

4. Dispositif selon la revendication 1, 2 ou 3, caractérisé en ce que les colonnes de protection (15) sont disposées en périphérie du coeur.

5. Dispositif selon la revendication 1 ou 4, caractérisé en ce que les dites colonnes de protection sont montées de façon à pouvoir se dilater librement.

6. Dispositif selon la revendication 1, caractérisé en ce que les rayons de courbures des conduits sont suffisamment élevés pour permettre le retrait et l'engagement d'une sonde et de sa jonction à partir de l'extérieur du réacteur.

7. Dispositif selon la revendication 1, caractérisé en ce que les colonnes supérieures (12) reposent sur une plaque supérieure de réacteur (13) appartenant aux équipements internes.

8. Dispositif selon l'une quelconque des revendications précédentes, caractérisé en ce que les sondes sont des thermocouples.

## Claims

1. A probe guide duct device for a nuclear reactor comprising a vessel (2) withstanding the pressure of a coolant and provided with a removable lid (4), a core (5) formed of fuel assemblies (6) and having a perforated upper core plate (7), internal equipments (8) fast with said upper core plate (7), interposed between the core (5) and the lid (4); said device comprising at least one through-sleeve (9) sealingly projecting through the lid (4) and a plurality of fixed individual guide ducts (10) each ending in the vicinity and confronting the outlet of the coolant from an assembly of the core, each duct (10), which follows a protection column (15) where it passes through the internals, being designed for accomodating an elongated element for junction with a probe located in the end portion of the duct, characterized: in that all guide ducts (10) entering through a same sleeve are grouped in an upper column (12) entering the vessel through the sleave (9) and extending vertically down up to a point above and in the vicinity of the internal equipments (8); in that the ducts (10) are then distributed along paths which are transverse to the assemblies and located in close proximity of the internal surface of the lid and of the vessel; in that the ducts (10) are then grouped together into a plurality of bundles each having a plurality of conduits, each bundle traversing said internal equipments (8) through one of the vertical protection columns (15) which are located at the periphery of the reactor, in zones where the coolant has a low turbulence; and in that the ducts (10) of each bundle are then distributed along paths which are transverse to the assemblies and close to the upper core plate (7) up to locations in the immediate vicinity of the outlets of the respective assemblies.

2. Guide duct device according to claim 1, characterized in that the horizontal runs of the ducts (10) in close vicinity of the outlets of the assemblies are integrated in the upper core plate (7).

3. Guide duct device according to claim 2, characterized in that the the runs integrated in the upper core plate (7) are held in position by mechanical elements forming covers (17).

4. Device according to claim 1, 2 or 3, characterized in that the protection columns (15) are disposed at the periphery of the core.

5. Device according to Claim 1 or 4, characterized in that said protection columns (15) are mounted so as to be able to expand freely.

6. Device according to claim 1, characterized in that the radii of curvature of the ducts are high enough to allow removal and engagement of a probe and of its junction from outside the reactor.

7. Device according to claim 1, characterized in that the upper columns (12) rest on an upper reactor plate (13) belonging to the internal equipments.

8. Device according to any one of the preceding claims, characterized in that the probes are thermocouples.

**Patentansprüche**

1. Vorrichtung zur Sondenführung für einen Kernreaktor, mit einem gegen den Druck eines Kühlmittels widerstandsfähigen Gefäß (2), das mit einem abnehmbaren Deckel (4) ausgestattet ist, einem Kern (5), der aus Brennelementbündeln (6) gebildet und mit einer durchbrochenen oberen Kernplatte (7) versehen ist, wobei mit der oberen Kernplatte (7) verbundene Innenausrüstungen (8) zwischen dem Kern (5) und dem Deckel (4) zwischengeschaltet sind; wobei die Vorrichtung zumindest eine den Deckel (4) abdichtend durchsetzende Hülse (9) und mehrere einzelne, fixierte Führungsleitungen (10) aufweist, die je in der Nähe des und gegenüber dem Kühlmittelauslaß aus einem Brennelementbündel des Kernes enden, wobei jede Leitung (10), die bei ihrem Durchgang durch die Innenausrüstung einer Schutzsäule (15) folgt, einen Durchgang für ein langgestrecktes Anschlußelement für eine im Endabschnitt der Leitung angeordnete Sonde bildet, dadurch gekennzeichnet: daß alle Führungsleitungen (10), die ein und dieselbe Hülse durchsetzen, in einer oberen Säule (12) gruppiert sind, welche durch die Hülse (9) hindurch das Gefäß durchsetzt und vertikal bis oberhalb und in die Nähe der Innenausrüstungen (8) hinunter reicht; daß die Leitungen (10) sich sodann auf Wege aufteilen, die quer zu den Brennelementbündeln verlaufen und in unmittelbarer Nähe der Innenseite des Deckels und des Gefäßes angeordnet sind; daß die Leitungen (10) ferner in mehreren Bündeln gruppiert sind, von denen jedes mehrere Leitungen enthält, wobei jedes Bündel die Innenausrüstungen (8) durchsetzt, indem es sich durch eine der vertikalen Schutzsäulen (15) erstreckt, die am Umfang des Reaktors in jenen Zonen angeordnet sind, in welchen das Kühlmittel verminderte Turbulenz hat; und daß die Leitungen (10) jedes Bündels sich auf Wege aufteilen, die quer zu den Brennelementbündeln und nahe der oberen Kernplatten (7) bis in unmittelbare Nähe des Auslasses der entsprechenden Brennelementbündel verlaufen.

2. Vorrichtung nach Anspruch 1, dadurch gekennzeichnet, daß die horizontalen Wege der Leitungen (10) in unmittelbarer Nähe des Auslasses der Brennelementbündel in die obere Kernplatte (7) integriert sind.

3. Vorrichtung nach Anspruch 2, dadurch gekennzeichnet, daß die in die obere Kernplatte (7) integrierten Wege durch mechanische Elemente gehalten werden, die Abdeckungen (17) bilden.

4. Vorrichtung nach einem der Ansprüche 1 bis 3, dadurch gekennzeichnet, daß die Schutzsäulen (15) am Umfang des Kernes angeordnet sind.

5. Vorrichtung nach Anspruch 1 oder 4, dadurch gekennzeichnet, daß die Schutzsäulen derart montiert sind, daß sie sich frei dehnen können.

6. Vorrichtung nach Anspruch 1, dadurch gekennzeichnet, daß die Krümmunssradien der Leitungen ausreichend groß sind, um das Zurückziehen und Einführen einer Sonde und ihrer Anschlußelemente von der Außenseite des Kernes her zu ermöglichen.

7. Vorrichtung nach Anspruch 1, dadurch gekennzeichnet, daß die oberen Säulen (12) auf einer oberen Kernplatte (13) ruhen, die zu den Innenausrüstungen gehört.

8. Vorrichtung nach einem der vorhergehenden Ansprüche, dadurch gekennzeichnet, daß die Sonden Thermoelemente sind.

FIG.1.

FIG.2.

EP 0 233 424 B1

# FIG.3.